# EUROPEAN PATENT APPLICATION

(11) **EP 4 080 803 A1**
(43) Date of publication of application: **26.10.2022**
(21) Application number: 20905307.3
(22) Date of filing: 24.12.2020
(51) Int. Cl.: H04L 5/00

(54) **NETWORK DATA RECOVERY METHOD AND DEVICE, AND MOBILE TERMINAL**

(30) Priority: 24.12.2019 CN 201911354293
(71) Applicant: Oneplus Technology (Shenzhen) Co., Ltd., Shenzhen, Guangdong 518000 (CN)
(72) Inventor: MIN, Zeke, Shenzhen, Guangdong 518042 (CN)
(74) Representative: Taor, Simon Edward William
(86) International application number: PCT/CN2020/139021
(87) International publication number: WO 2021/129742

(57) **Abstract**

The present disclosure provides a method and apparatus for network data restoration and a mobile terminal. The method includes: obtaining, in response to detecting that an area where the mobile terminal is located changes, a predetermined carrier combination priority, where the carrier combination priority is a priority order of a plurality of candidate carrier combinations supported by the mobile terminal, at least some of the plurality of candidate carrier combinations having different rates for network access; determining a target carrier combination based on the carrier combination priority; and accessing, based on the target carrier combination, a network corresponding to the area where the mobile terminal is located,, to restore network data.

## Description

### CROSS REFERENCE

The present disclosure claims priority to Chinese Patent Application No. 201911354293.2, titled "METHOD AND APPARATUS FOR NETWORK DATA RESTORATION AND MOBILE TERMINAL" and filed with the China National Intellectual Property Administration on December 24, 2019, which is incorporated herein by reference in its entirety.

### TECHNICAL FIELD

The present disclosure relates to Internet technology, and more particularly, to a method and apparatus for network data restoration and a mobile terminal.

### BACKGROUND

Carrier Aggregation (CA) technology is a key technology for mobile terminals to access a network. In practical applications, a mobile terminal (such as a smart phone or a tablet computer) can use multiple carriers to access a network simultaneously based on the carrier aggregation technology, so as to increase the transmission bandwidth for the mobile terminal to access the network, thereby providing a user with a more efficient network transmission rate. Currently, taking a mobile terminal accessing the 4G network as an example, the 4G network will actively query terminal capabilities of the mobile terminal, determine all CA combinations supported by the mobile terminal according to the terminal capabilities, determine a network category matching the maximum CA combination supported by the mobile terminal, and always provide access to the 4G network using the network category. However, such method may not be able to maintain the connection between the mobile terminal and the network after the area where the mobile terminal is located changes, resulting in loss of network data after the area where the mobile terminal is located changes and thus poor user experience.

### SUMMARY

The embodiments of the present disclosure provide a method and apparatus for network data restoration and a mobile terminal, capable of mitigating the problem of network data loss and effectively improving user experience in using network data.

In a first aspect, an embodiment of the present disclosure provides a method for network data restoration. The method is applied in a mobile terminal, and includes: obtaining, in response to detecting that an area where the mobile terminal is located changes, a predetermined carrier combination priority, the carrier combination priority being a priority order for a plurality of candidate carrier combinations supported by the mobile terminal, at least some of the plurality of candidate carrier combinations having different rates for network access; determining a target carrier combination based on the carrier combination priority; and accessing, based on the target carrier combination, a network corresponding to the area where the mobile terminal is located, to restore network data.

In an embodiment, the step of setting the carrier combination priority may include: obtaining the plurality of candidate carrier combinations supported by the mobile terminal; and ordering priorities of the plurality of candidate carrier combinations based on respective rates for network access of the plurality of candidate carrier combinations, to obtain the carrier combination priority.

In an embodiment, the step of determining the target carrier combination based on the carrier combination priority may include: reporting one or more candidate carrier combinations to the network according to the order in the carrier combination priority, from high to low, until one reported candidate carrier combination results in a successful connection to the network; and determining the candidate carrier combination that results in the successful connection to the network as the target carrier combination.

In an embodiment, the step of accessing, based on the target carrier combination, the network corresponding to the area where the mobile terminal is located may include: determining a network category matching the target carrier combination, and accessing, based on the network category, the network corresponding to the area where the mobile terminal is located.

In an embodiment, the step of obtaining the plurality of candidate carrier combinations supported by the mobile terminal may include: determining an operator to which the network corresponding to the area where the mobile terminal is located belongs; obtaining a carrier code coded for the operator and a terminal capability of the mobile terminal, the terminal capability including one or more of 2G capability, 3G capability, 4G capability, or 5G capability; and determining the plurality of candidate carrier combinations supported by the mobile terminal based on the carrier code.

In a second aspect, an embodiment of the present disclosure further provides an apparatus for network data restoration. The apparatus is applied in a mobile terminal, and includes: a priority obtaining module configured to obtain, in response to detecting that an area where the mobile terminal is located changes, a predetermined carrier combination priority, wherein the carrier combination priority is a priority order for a plurality of candidate carrier combinations supported by the mobile terminal, at least some of the plurality of candidate carrier combinations having different rates for network access; a combination determining module configured to determine a target carrier combination based on the carrier combination priority; and a network accessing module configured to access, based on the target carrier combination, a network corresponding to the area where the mobile terminal is located, to restore network data.

In one embodiment, the apparatus may further include: a combination obtaining module configured to obtain the plurality of candidate carrier combinations supported by the mobile terminal; and a priority setting module configured to order priorities of the plurality of candidate carrier combinations based on respective rates for network access of the plurality of candidate carrier combinations, to obtain the carrier combination priority.

In an embodiment, the combination determining module may be further configured to: report one or more candidate carrier combinations to the network according to the order in the carrier combination priority, from high to low, until one reported candidate carrier combination results in a successful connection to the network; and determine the candidate carrier combination that results in the successful connection to the network as the target carrier combination.

In a third aspect, an embodiment of the present disclosure further provides a mobile terminal. The mobile terminal includes a processor and a memory. The memory has a computer program stored thereon. The computer program, when executed by the processor, causes the processor to perform any of the methods according to the first aspect.

In a fourth aspect, an embodiment of the present disclosure further provides a computer storage medium having computer software instructions stored thereon. The computer software instructions are used in any of the methods according to the first aspect.

The embodiments of the present disclosure provide a method and apparatus for network data restoration and a mobile terminal. According to the method, in response to detecting that an area where a mobile terminal is located changes, a carrier combination priority is obtained. The carrier combination priority is a priority order for a plurality of candidate carrier combinations supported by the mobile terminal. Each candidate carrier combination has a different rate for network access, or at least some of the plurality of candidate carrier combinations have different rates for network access. Then, a target carrier combination is determined based on the carrier combination priority, and a network corresponding to the area where the mobile terminal is located is accessed based on the target carrier combination, to restore network data. With the above method, when the area of the mobile terminal changes, the target carrier combination required to access the network can be determined adaptively according to the priority order for the plurality of candidate carrier combinations, and the network can be accessed based on the target carrier combination to restore the network data and mitigate the problem of network data loss, thereby effectively improving the user experience in using network data.

Additional features and advantages of the present disclosure will be set forth in the description below, and become apparent at least in part from the description, or can be learned from practicing of the present disclosure. The objects and other advantages of the present disclosure will be achieved and obtained based on the structures particularly pointed out in the description, claims, and figures.

In order to make the above objects, features, and advantages of the present disclosure more apparent and easier to understand, the preferred embodiments will be exemplified below, and will be described in detail the in following with reference to the figures.

### BRIEF DESCRIPTION OF DRAWINGS

In order to describe the technical solutions in the embodiments of the present disclosure or the related art more clearly, the drawings to be used in the description of the embodiments or the related art will be briefly introduced below. Obviously, the drawings in the following description are only some embodiments of the present disclosure, and other drawings can be obtained by those of ordinary skill in the art based on these drawings without any inventive efforts.
FIG. 1 is a schematic flowchart illustrating a method for network data restoration according to an embodiment of the present disclosure;
FIG. 2 is a schematic flowchart illustrating another method for network data restoration according to an embodiment of the present disclosure;
FIG. 3 is a schematic diagram showing a structure of an apparatus for network data restoration according to an embodiment of the present disclosure;
FIG. 4 is a schematic diagram showing a structure of another apparatus for network data restoration according to an embodiment of the present disclosure; and
FIG. 5 is a schematic diagram showing a structure of a mobile terminal according to an embodiment of the present disclosure.

### DESCRIPTION OF EMBODIMENTS

In order to make the obj ects, technical solutions, and advantages of the embodiments of the present disclosure more apparent, the technical solutions of the present disclosure will be described below clearly and completely with reference to the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

Currently, a change in an area where a mobile terminal is located may cause the mobile terminal to be unable to access a network, thereby causing network data loss and affecting user experience. In view of this, the present disclosure provides a method and apparatus for network data restoration and a mobile terminal, capable of mitigating the problem of network data loss and effectively improving user experience in using network data.

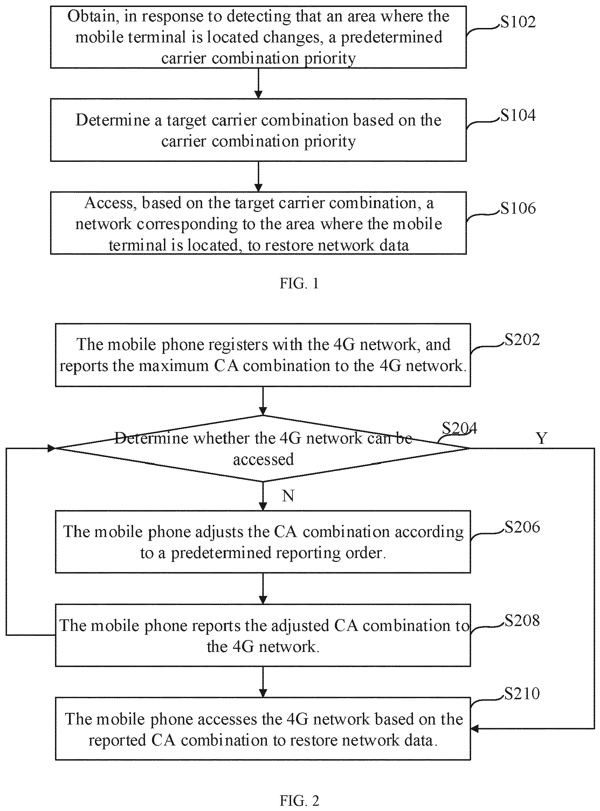

In order to facilitate understanding of this embodiment, a method for network data restoration disclosed in this embodiment of the present disclosure will be introduced in detail first. The method is applied in a mobile terminal, such as a smart phone or a tablet computer. Referring to FIG. 1, which is a schematic flowchart illustrating a method for network data restoration, the method mainly includes the following steps S102 to S106.

At step S102, in response to detecting that an area where the mobile terminal is located changes, a predetermined carrier combination priority is obtained.

The carrier combination priority is a priority order for a plurality of candidate carrier combinations supported by the mobile terminal, and each candidate carrier combination can be used to access a network. Each candidate carrier combination may have a different rate for network access, or at least some of the plurality of candidate carrier combinations may have different rates for network access. The mobile terminal can access the network within the rate range corresponding to a carrier combination after reporting the carrier combination to the network. The candidate carrier combinations supported by the mobile terminal can be determined based on a terminal capability of the mobile terminal. The terminal capability may include a capability of the mobile terminal to connect to the network, such as one or more of 2G capability, 3G capability, 4G capability, and 5G capability. When the terminal capability of the mobile terminal includes the 4G capability, it means that the mobile terminal can connect to the 4G network. In practical applications, CA combinations (i.e., the above carrier combinations) corresponding to each terminal capability and the priority of each CA combination can be preconfigured to obtain the candidate carrier combination priority, and the mobile terminal can be tracked to detect the change in the area where the mobile terminal is located. When the mobile terminal moves from one network coverage area to another, the candidate carrier combination priority corresponding to the network to be accessed by the mobile terminal can be obtained.

At step S104, a target carrier combination is determined based on the carrier combination priority.

In an embodiment, a candidate carrier combination that can be used to access the network corresponding to the area where the mobile terminal is located may be selected from the plurality of candidate carrier combinations according to the order in the carrier combination priority, from high to low, and the selected candidate carrier combination may be determined as the target carrier combination. Here, the network corresponding to the area where the mobile terminal is located is the above network to be accessed.

At step S106, the network corresponding to the area where the mobile terminal is located is accessed based on the target carrier combination to restore network data.

Here, the network data may be understood as data such as web pages, videos, or images browsed by the user online. In practical applications, the mobile terminal may report the determined target carrier combination to the network, and determine whether the mobile terminal can access the network based on the target carrier combination. If the mobile terminal can access the network normally, the network data before the area where the mobile terminal is located changes can be restored. For example, if the mobile terminal is used for browsing a page X using a 4G network and the mobile terminal is detected to move from the 4G network coverage area A to another 4G network coverage area B, and if the candidate carrier combinations corresponding to the 4G network supported by the mobile terminal are Combination 1, Combination 2, and Combination 3, the target carrier combination may be determined as Combination 1 according to the carrier combination priority and Combination 1 can be used to access the 4G network corresponding to the area B, such that the user can continue to browse the page X to achieve network data restoration.

In the above method for network data restoration according to the embodiment of the present disclosure, in response to detecting that the area where the mobile terminal is located changes, the carrier combination priority is obtained. Then, the target carrier combination is determined based on the carrier combination priority, and the network corresponding to the area where the mobile terminal is located is accessed based on the target carrier combination, to restore network data. With the above method, when the area of the mobile terminal changes, the target carrier combination required to access the network can be determined adaptively according to the priority order for the plurality of candidate carrier combinations, and the network can be accessed based on the target carrier combination to restore the network data and mitigate the problem of network data loss, thereby effectively improving the user experience in using network data.

In order to enable the mobile terminal to maintain a high network access rate, a candidate carrier combination with a higher network access rate may be selected preferentially when determining the target carrier combination. In view of this, an embodiment of the present disclosure provides a method for setting the carrier combination priority, referring to steps 1 to 2 below.

At step 1, the plurality of candidate carrier combinations supported by the mobile terminal is obtained. Since the candidate carrier combinations supported by the mobile terminal depend on an operator used by the mobile terminal, when the above step 1 is performed, the plurality of candidate carrier combinations supported by the mobile terminal can be obtained according to the following steps 1.1 to 1.3.

At step 1.1, an operator to which the network corresponding to the area where the mobile terminal is located belongs is determined. In an embodiment, the operator (such as China Mobile, China Telecom, or China Unicom) to which the network corresponding to the area where the mobile terminal is located belongs may be determined by reading a Subscriber Identity Module (SIM) card provided in the mobile terminal.

At step 1.2, a carrier code coded for the operator and a terminal capability of the mobile terminal is obtained. Here, the carrier code may be used to represent the carrier combinations supported by the mobile terminal. Currently, networks of multiple operators may be deployed in the same area at the same time. In order to enable mobile terminals to use the networks of different operators, carrier codes can be coded for the terminal capabilities and the operators, respectively. For example, when coding the carrier code corresponding to the 4G network of China Mobile Communications Corporation (China Mobile, or CMCC), since CMCC supports frequency bands such as LTE B38, LTE B39, and LTE B40, the carrier combinations corresponding to the above frequency bands can be configured, and the configured carrier combinations can be written into the mobile terminal in the form of carrier codes, so as to be used to determine the plurality of candidate carrier combinations supported by the mobile terminal when setting the carrier combination priority. Here, the 4G network of CMCC means that the operator is CMCC and the terminal capability is 4G capability.

At step 1.3, the plurality of candidate carrier combinations supported by the mobile terminal are determined based on the carrier code. For example, if it is determined that the 4G network corresponding to the area where the mobile terminal is located belongs to CMCC, the carrier code corresponding to the mobile 4G network is obtained, thereby determining the plurality of candidate carrier combinations supported by the mobile terminal and corresponding to the mobile 4G network.

At step 2, priorities of the plurality of candidate carrier combinations are ordered based on respective rates for network access of the plurality of candidate carrier combinations, to obtain the carrier combination priority. In an embodiment, the priority of each candidate carrier combination may be positively correlated with the rate for network access of the candidate carrier combination. That is, the higher the rate for network access of the candidate carrier combination, the higher the priority. Table 1 shows rates for network access of the candidate carrier combinations. Table 1 shows candidate carrier combinations (UE DL Category) supported by the mobile terminal, maximum numbers of Downlink Share Channel (DL-SCH, a transport channel) transport block bits received within a Transmit Time Interval (TTI), maximum numbers of bits of a DL-SCH transport block received within a TTI, total numbers of soft channel bits, and maximum numbers of supported layers for spatial multiplexing in DL. Based on the data provided in Table 1, it can be calculated that Category 12 and Category11 have the highest rates, and thus the candidate carrier combination matching Category12 and the candidate carrier combination matching Category 11 are set to have the highest priority. Alternatively, the respective priorities of the candidate carrier combination matching Category12 and the candidate carrier combination matching Category11 may be adjusted depending on actual situations.

**Table 1**

| UE DL Category | Maximum number of DL-SCH transport block bits received within a TTI | Maximum number of bits of a DL-SCH transport block received within a TTI | Total number of soft channel bits | Maximum number of supported layers for spatial multiplexing in DL |
|---|---|---|---|---|
| | | | | |
| DL Category M1 | 1000 | 1000 | 25344 | 1 |
| DL Category M1 | 4008 | 4008 | 73152 | 1 |
| DL Category 0 | 1000 | 1000 | 25344 | 1 |
| DL Category 4 | 150752 | 75376 | 1827072 | 2 |
| DL Category 6 | 301504 | 149776 (4 layers, 64QMA) 75376 (2 layers, 64QMA) | 3654144 | 2 or 4 |
| DL Category 7 | 301504 | 149776 (4 layers, 64QMA) 75376 (2 layers, 64QMA) | 3654144 | 2 or 4 |
| DL Category 9 | 452256 | 149776 (4 layers, 64QMA) 75376 (2 layers, 64QMA) | 5481216 | 2 or 4 |
| DL Category 10 | 452256 | 149776 (4 layers, 64QMA) 75376 (2 layers, 64QMA) | 5481216 | 2 or 4 |
| DL Category 11 | 603008 | 149776 (4 layers, 64QMA) 195816 (4 layers, 256QMA) 75376 (2 layers, 64QMA) 97896 (2layers, 256QMA) | 7308288 | 2 or 4 |
| DL Category 12 | 603008 | 149776 (4 layers, 64QMA) 195816 (4 layers, 256QMA) 75376 (2 layers, 64QMA) 97896 (2layers, 256QMA) | 7308288 | 2 or 4 |

If the mobile terminal always uses the maximum carrier combination (i.e., the candidate carrier combination with the highest priority) to access the network, there may be cases where the maximum carrier combination does not match the carrier combination supported by the area where the mobile terminal is located. For example, if the maximum carrier combination of the mobile terminal is category20 and the carrier combination supported by the area where the mobile terminal is located is category 18, in this case the mobile terminal will be unable to successfully access the network. Therefore, on the basis of the above method for setting the carrier combination priority, an embodiment of the present disclosure further provides a possible implementation method of determining the target carrier combination based on the carrier combination priority. Firstly one or more candidate carrier combinations are reported to the network, one by one, according to the order in the carrier combination priority, from high to low, until one reported candidate carrier combination results in a successful connection to the network. For example, the candidate carrier combinations include Combination 1, Combination 2, Combination 3, Combination 4, etc., and are ordered according to the carrier combination priority, from high to low, as [Combination 1, Combination 2, Combination 3, Combination 4]. In a possible embodiment, Combination 1 is reported to the network first, and it is determined whether the mobile terminal can be successfully connected to the network using Combination 1. If it is determined that the mobile terminal is successfully connected to the network, Combination 1 is determined as the target carrier combination. If the network connection fails, Combination 2 is reported to the network, until the reported candidate carrier combination results in a successful connection to the network, and the candidate carrier combination that results in the successful connection to the network is determined as the target carrier combination. In the embodiment of the present disclosure, by adaptively determining the target carrier combination, it is possible to quickly and reliably connect to the network after the area where the mobile terminal is located changes, thereby mitigating the problem in the related art associated with of inability to access the network due to the fact that the same carrier combination is always used for connecting to the network.

In order to facilitate the understanding of the above step S106, in an embodiment of the present disclosure, when accessing, based on the target carrier combination, the network corresponding to the area where the mobile terminal is located, a network category matching the target carrier combination may be determined, and then the network corresponding to the area where the mobile terminal is located may be accessed based on the network category. The network category may include category20, category 18, category 16, category 12, etc. For example, the network category matching Candidate Carrier Combination 1 may be category20, the network category matching Candidate Carrier Combination 2 may be category18, and the network category matching Candidate Carrier Combination 3 may be category16, and the network category matching Candidate Carrier Combination 4 may be category12. If the target carrier combination is Candidate Carrier Combination 1, the network corresponding to the area where the mobile terminal is located can be accessed based on category20.

On the basis of the above embodiments, an embodiment of the present disclosure provides a possible application example of a method for network data restoration. Taking a mobile phone to be connected to a 4G network as an example, a flowchart of another method for network data restoration is shown in FIG. 2, which mainly includes the following steps S202 to S210.

At step S202, the mobile phone registers with the 4G network, and reports the maximum CA combination to the 4G network. The maximum CA combination is also the candidate carrier combination with the highest priority as described above. For example, category20 is reported to the 4G network.

At step S204, it is determined whether the 4G network can be accessed. If so, the method proceeds with step S210; or otherwise the method proceeds with step S206. In an embodiment, it can be determined whether the networking speed within a predetermined time period is greater than a predetermined threshold, and if so, it is determined that the 4G network can be accessed; or otherwise it is determined that the 4G network cannot be accessed.

At step S206, the mobile phone adjusts the CA combination according to a predetermined reporting order. The reporting order is the carrier combination priority as described above. In an embodiment, the reporting order may be set based on the rates for network access of the carrier combinations, or based on actual requirements.

At step S208, the mobile phone reports the adjusted CA combination to the 4G network, and performs step S204. For example, if category20 cannot be used for accessing the network, category 18 can be reported to the 4G network. If category 18 still cannot be used for accessing the network, category 16 can be reported to the 4G network, until the reported CA combination can be used for accessing the network.

At step S210, the mobile phone accesses the 4G network based on the reported CA combination to restore network data.

In order to allow the mobile terminal to access the network with a higher networking speed after moving to an area with the higher networking speed, the above steps S202 to S210 can be performed for adjusting the target carrier combination every time it is detected that the user carries the mobile phone to move between network coverage areas. For example, when the mobile phone is located in Area 1, it is determined by the above method to access the 4G network based on category 16. When the mobile phone moves to Area 2, it first uses category20 to access the 4G network according to the above method. If Area 2 supports category20, the mobile phone can access the network with a higher networking speed.

To summarize, in the embodiment of the present disclosure, the CA combination used to access the network can be adjusted adaptively in response to detecting the change in the area where the mobile terminal is located, and the connection between the mobile terminal and the network can be established quickly and reliably, so as to restore the network data that is lost due to the area change. Moreover, since different carrier combinations have different rates for network access, the mobile terminal can experience different rates for network access after adaptively adjusting the CA combination for accessing the network, so as to meet the different rate requirements of the user.

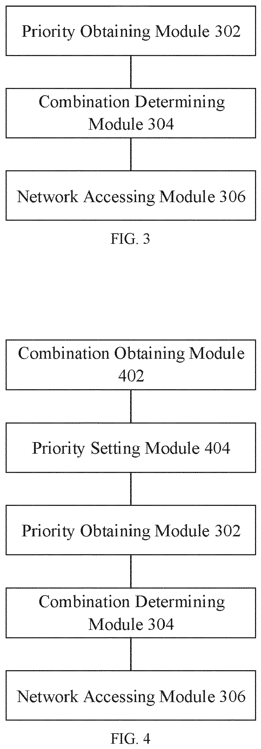

For the methods for network data restoration according to the above embodiments, an embodiment of the present disclosure provides an apparatus for network data restoration, which is applied in a mobile terminal. Referring to FIG. 3, which is a schematic diagram showing a structure of an apparatus for network data restoration, the apparatus may include the following parts.

The priority obtaining module 302 is configured to configured to obtain, in response to detecting that an area where the mobile terminal is located changes, a predetermined carrier combination priority. The carrier combination priority is a priority order for a plurality of candidate carrier combinations supported by the mobile terminal. At least some of the plurality of candidate carrier combinations have different rates for network access.

The combination determining module 304 is configured to determine a target carrier combination based on the carrier combination priority.

The network accessing module 306 is configured to access, based on the target carrier combination, a network corresponding to the area where the mobile terminal is located, to restore network data.

With the above apparatus according to the embodiment of the present disclosure, when the area of the mobile terminal changes, the target carrier combination required to access the network can be determined adaptively according to the priority order for the plurality of candidate carrier combinations, and the network can be accessed based on the target carrier combination to restore the network data and mitigate the problem of network data loss, thereby effectively improving the user experience in using network data.

On the basis of FIG. 3, an embodiment of the present disclosure provides a schematic diagram showing a structure of another apparatus for network data restoration, as shown in FIG. 4. FIG. 4 shows that the apparatus for network data restoration further includes a combination obtaining module 402 and a priority setting module 404. The combination obtaining module 402 is configured to obtain the plurality of candidate carrier combinations supported by the mobile terminal. The priority setting module 404 is configured to order priorities of the plurality of candidate carrier combinations based on respective rates for network access of the plurality of candidate carrier combinations, to obtain the carrier combination priority.

In an embodiment, the above combination determination module may be further configured to: report one or more candidate carrier combinations to the network according to the order in the carrier combination priority, from high to low, until one reported candidate carrier combination results in a successful connection to the network; and determine the candidate carrier combination that results in the successful connection to the network as the target carrier combination.

In an embodiment, the network accessing module 306 may be further configured to: determine a network category matching the target carrier combination, and access, based on the network category, the network corresponding to the area where the mobile terminal is located.

In one embodiment, the above combination obtaining module 402 may be further configured to: determine an operator to which the network corresponding to the area where the mobile terminal is located belongs; obtain a carrier code coded for the operator and a terminal capability of the mobile terminal, the terminal capability including one or more of 2G capability, 3G capability, 4G capability, or 5G capability; and determine the plurality of candidate carrier combinations supported by the mobile terminal based on the carrier code.

The implementation principles and technical effects of the apparatuses according to the embodiments of the present disclosure are the same as those of the above method embodiments. For brevity, for the content that is not described in the apparatus embodiments, reference may be made to the corresponding content in the above method embodiments.

An embodiment of the present disclosure provides a mobile terminal. The mobile terminal includes a processor and a storage device. The storage device has a computer program stored thereon. The computer program, when executed by the processor, causes the processor to perform the method according to any of the above embodiments.

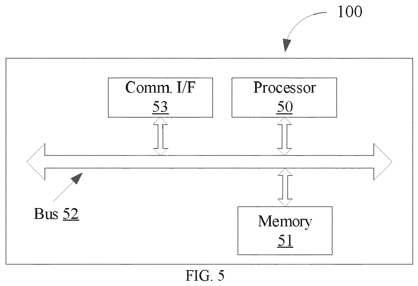

FIG. 5 is a schematic diagram showing a structure of a mobile terminal according to an embodiment of the present disclosure. The mobile terminal 100 includes: a processor 50, a memory 51, a bus 52, and a communication interface 53. The processor 50, the communication interface 53, and the memory 51 are connected via a bus 52. The processor 50 is configured to execute executable modules, such as computer programs, stored in the memory 51.

The memory 51 may include a high-speed Random Access Memory (RAM), and/or a non-volatile memory, such as at least one magnetic disk memory. The communication connection between the network element of the system and at least one other network element can be achieved using at least one communication interface 53 (which may be wired or wireless), via Internet, a wide area network, a local network, a metropolitan area network, or the like.

The bus 52 may be an ISA bus, a PCI bus, an EISA bus, or the like. The bus can be divided into an address bus, a data bus, a control bus, and the like. For the purpose of illustration, only one bidirectional arrow is shown in FIG. 5, but it does not mean that there is only one bus or one type of bus.

Here, the memory 51 has a program stored thereon, and the processor 50 is configured to execute the program in response to receiving an execution instruction. The method performed by the apparatus defined by the process disclosed in any of the above embodiments of the present disclosure can be applied in the processor 50, or implemented by the processor 50.

The processor 50 may be an integrated circuit chip with signal processing capability. In an implementation, the steps of the above methods can be implemented by hardware integrated logic circuits in a processor 50 or instructions in the form of software. The processor 50 can be a general purpose processor, such a Central Processing Unit (CPU) or a Network Processor (NP), or can be a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as a random access memory, a flash memory, a read-only memory, a programmable read-only memory, an electrically erasable programmable memory, or a register. The storage medium can be located in the memory 51, and the processor 50 can read information from the memory 51 and perform the steps of the above methods in combination with its hardware.

In an embodiment of the present disclosure, a computer program product of a readable storage medium is provided, which includes a computer-readable storage medium storing program codes. The program codes include instructions for performing the method described in any of the above method embodiments. For specific implementations, reference may be made to the above method embodiments, and details thereof will be omitted here.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

Finally, it is to be noted that the above embodiments are only possible implementations of the present disclosure, and are used to illustrate, rather than limiting, the technical solutions of the present disclosure. The scope of the present disclosure is not limited to these embodiment. While the present disclosure has been described in detail with reference to the above embodiment, it can be appreciated by those of ordinary skill in the art that any person skilled in the art can still modify the technical solutions described in the above embodiments, readily envisage changes thereof, or provide equivalent alternatives to some technical features therein, without departing from the scope disclosed in the present disclosure. These modifications, changes, or alternatives do not make the essence of the corresponding technical solutions deviate from the spirit and scope of the technical solutions in the embodiments of the present disclosure, and are to be encompassed by the scope of the present disclosure as defined by the claims as attached.

## Claims

1. A method for network data restoration, applied in a mobile terminal, the method comprising:
obtaining, in response to detecting that an area where the mobile terminal is located changes, a predetermined carrier combination priority, wherein the carrier combination priority is a priority order for a plurality of candidate carrier combinations supported by the mobile terminal, at least some of the plurality of candidate carrier combinations having different rates for network access;
determining a target carrier combination based on the carrier combination priority; and
accessing, based on the target carrier combination, a network corresponding to the area where the mobile terminal is located, to restore network data.

2. The method according to claim 1, wherein setting of the carrier combination priority comprises:
obtaining the plurality of candidate carrier combinations supported by the mobile terminal; and
ordering priorities of the plurality of candidate carrier combinations based on respective rates for network access of the plurality of candidate carrier combinations, to obtain the carrier combination priority.

3. The method according to claim 1, wherein said determining the target carrier combination based on the carrier combination priority comprises:
reporting one or more candidate carrier combinations to the network according to the order in the carrier combination priority, from high to low, until one reported candidate carrier combination results in a successful connection to the network; and
determining the candidate carrier combination that results in the successful connection to the network as the target carrier combination.

4. The method according to claim 1, wherein said accessing, based on the target carrier combination, the network corresponding to the area where the mobile terminal is located comprises:
determining a network category matching the target carrier combination, and accessing, based on the network category, the network corresponding to the area where the mobile terminal is located.

5. The method according to claim 2, wherein said obtaining the plurality of candidate carrier combinations supported by the mobile terminal comprises:
determining an operator to which the network corresponding to the area where the mobile terminal is located belongs;
obtaining a carrier code coded for the operator and a terminal capability of the mobile terminal, wherein the terminal capability comprises one or more of 2G capability, 3G capability, 4G capability, or 5G capability; and
determining the plurality of candidate carrier combinations supported by the mobile terminal based on the carrier code.

6. An apparatus for network data restoration, applied in a mobile terminal, the apparatus comprising:
a priority obtaining module configured to obtain, in response to detecting that an area where the mobile terminal is located changes, a predetermined carrier combination priority, wherein the carrier combination priority is a priority order for a plurality of candidate carrier combinations supported by the mobile terminal, at least some of the plurality of candidate carrier combinations having different rates for network access;
a combination determining module configured to determine a target carrier combination based on the carrier combination priority; and
a network accessing module configured to access, based on the target carrier combination, a network corresponding to the area where the mobile terminal is located, to restore network data.

7. The apparatus according to claim 6, further comprising:
a combination obtaining module configured to obtain the plurality of candidate carrier combinations supported by the mobile terminal; and
a priority setting module configured to order priorities of the plurality of candidate carrier combinations based on respective rates for network access of the plurality of candidate carrier combinations, to obtain the carrier combination priority.

8. The apparatus according to claim 6, wherein the combination determining module is further configured to:
report one or more candidate carrier combinations to the network according to the order in the carrier combination priority, from high to low, until one reported candidate carrier combination results in a successful connection to the network; and
determine the candidate carrier combination that results in the successful connection to the network as the target carrier combination.

9. A mobile terminal, comprising a processor and a memory, wherein the memory has a computer program stored thereon, the computer program, when executed by the processor, causes the processor to:
obtain, in response to detecting that an area where the mobile terminal is located changes, a predetermined carrier combination priority, wherein the carrier combination priority is a priority order for a plurality of candidate carrier combinations supported by the mobile terminal, at least some of the plurality of candidate carrier combinations having different rates for network access;
determine a target carrier combination based on the carrier combination priority; and
access, based on the target carrier combination, a network corresponding to the area where the mobile terminal is located, to restore network data.

10. The mobile terminal according to claim 9, wherein setting of the carrier combination priority comprises:
obtaining the plurality of candidate carrier combinations supported by the mobile terminal; and
ordering priorities of the plurality of candidate carrier combinations based on respective rates for network access of the plurality of candidate carrier combinations, to obtain the carrier combination priority.

11. The mobile terminal according to claim 9, wherein said determining the target carrier combination based on the carrier combination priority comprises:
reporting one or more candidate carrier combinations to the network according to the order in the carrier combination priority, from high to low, until one reported candidate carrier combination results in a successful connection to the network; and
determining the candidate carrier combination that results in the successful connection to the network as the target carrier combination.

12. The mobile terminal according to claim 9, wherein said accessing, based on the target carrier combination, the network corresponding to the area where the mobile terminal is located comprises:
determining a network category matching the target carrier combination, and accessing, based on the network category, the network corresponding to the area where the mobile terminal is located.

13. The mobile terminal according to claim 10, wherein said obtaining the plurality of candidate carrier combinations supported by the mobile terminal comprises:
determining an operator to which the network corresponding to the area where the mobile terminal is located belongs;
obtaining a carrier code coded for the operator and a terminal capability of the mobile terminal, wherein the terminal capability comprises one or more of 2G capability, 3G capability, 4G capability, or 5G capability; and
determining the plurality of candidate carrier combinations supported by the mobile terminal based on the carrier code.

14. A computer storage medium, having computer software instructions stored thereon, wherein the computer software instructions, when invoked and executed by a processor, cause the processor to:
obtain, in response to detecting that an area where the mobile terminal is located changes, a predetermined carrier combination priority, wherein the carrier combination priority is a priority order for a plurality of candidate carrier combinations supported by the mobile terminal, at least some of the plurality of candidate carrier combinations having different rates for network access;
determine a target carrier combination based on the carrier combination priority; and
access, based on the target carrier combination, a network corresponding to the area where the mobile terminal is located, to restore network data.

15. The computer storage medium according to claim 14, wherein setting of the carrier combination priority comprises:
obtaining the plurality of candidate carrier combinations supported by the mobile terminal; and
ordering priorities of the plurality of candidate carrier combinations based on respective rates for network access of the plurality of candidate carrier combinations, to obtain the carrier combination priority.

16. The computer storage medium of claim 14, wherein said determining the target carrier combination based on the carrier combination priority comprises:
reporting one or more candidate carrier combinations to the network according to the order in the carrier combination priority, from high to low, until one reported candidate carrier combination results in a successful connection to the network; and
determining the candidate carrier combination that results in the successful connection to the network as the target carrier combination.

17. The computer storage medium according to claim 14, wherein said accessing, based on the target carrier combination, the network corresponding to the area where the mobile terminal is located comprises:
determining a network category matching the target carrier combination, and accessing, based on the network category, the network corresponding to the area where the mobile terminal is located.

18. The computer storage medium according to claim 15, wherein said obtaining the plurality of candidate carrier combinations supported by the mobile terminal comprises:
determining an operator to which the network corresponding to the area where the mobile terminal is located belongs;
obtaining a carrier code coded for the operator and a terminal capability of the mobile terminal, wherein the terminal capability comprises one or more of 2G capability, 3G capability, 4G capability, or 5G capability; and
determining the plurality of candidate carrier combinations supported by the mobile terminal based on the carrier code.
